# EUROPEAN PATENT SPECIFICATION

(11) **EP 3 728 394 B1**
(45) Date of publication and mention of the grant of the patent: **25.08.2021**
(21) Application number: 20710277.3
(22) Date of filing: 14.02.2020
(51) Int. Cl.: C08G 63/08, C08G 63/664, C08G 63/80, C08G 63/60

(54) **METHOD TO PREPARE BRANCHED POLYMERS OF LACTIC ACID**
VERFAHREN ZUR HERSTELLUNG VON VERZWEIGTEN MILCHSÄUREPOLYMEREN
PROCÉDÉ DE PRÉPARATION DE POLYMÈRES RAMIFIÉS D'ACIDE LACTIQUE

(30) Priority: 28.02.2019 IT 201900002891 U
(43) Date of publication of application: 28.10.2020
(73) Proprietor: Bio Valore World S.P.A. Societa' Benefit, 86039 Termoli (CB) (IT)
(72) Inventor: CASERTA, Claudio, 00191 Roma (IT); ALTORIO, Alessio, 00191 Roma (IT); PEDRETTI, Mauro, 00191 Roma (IT); CASTRICHELLA, Dario, 00191 Roma (IT); TOS, Riccardo, 00191 Roma (IT); IMPROTA, Francesco, 00191 Roma (IT); SCARANO, Davide Vincenzo Giuseppe, 86039 Termoli (CB) (IT)
(74) Representative: Bosman, Cesare
(86) International application number: PCT/IB2020/051267
(87) International publication number: WO 2020/174313

(56) References cited:
- EP-A1- 2 455 414
- CN-A- 101 585 911
- FR-A1- 3 008 701

## Description

### CROSS-REFERENCE TO RELATED APPLICATIONS

This patent application claims priority from Italian patent application no. 102019000002891 filed on 28/02/2019.

### TECHNICAL FIELD

The present invention relates to a method to prepare branched polymers of lactic acid having a low melt viscosity.

### BACKGROUND ART

For some time now polylactic acid (PLA) has been attracting a great deal of industrial interest due to the fact it comes from renewable sources and to its easy degradation both in the human organism (useful as suture thread) and during composting. In this regard, a part of research concentrates on improving the features of PLA to be able to use it advantageously in packaging. In particular, attempts are made to improve its rheological properties, thermal stability and barrier effect. EP 2 455 414 A1 discloses methods of preparing high molecular weight branched polyester.

To date, modifications to PLA above all concern the use of nanofillers, or the use of particular comonomers. In particular, nano composites obtained by mixing PLA with graphite, montmorillonite or other silicates are known; instead, generally known branched PLAs generally have a dendrimer structure with synthesis strictly controlled and with polydispersity of the molecular weights of approximately 1.

One of the limits of PLA for a correct industrial application thereof also concerns its high melt viscosity, necessary to achieve adequate mechanical properties. As can be immediately understood by those skilled in the art, this limit affects the possibility of processing the PLA-based polymer by means of injection moulding and, consequently, the possibility of producing a large variety of products.

Therefore, there was a need to provide a solution that allowed the preparation of structurally modified PLA and that, at the same time, lowered its viscosity so that it could be processed by means of injection moulding.

The inventors of the present invention have provided a solution that allows PLA to be modified bestowing thereon both the features belonging to materials to be used in the packaging sector and, at the same time, a lower viscosity than that of the initial PLA and that allows it to undergo injection moulding.

### DISCLOSURE OF INVENTION

The subject matter of the present invention is a method to prepare a polylactic acid-based polymer and having a molecular weight (Mn) greater than 25,000 g/mol; said method comprising
- a mixing step, during which lactide monomers, at least one polymerization catalyst and natural origin reactants are mixed together;
- a polymerization step, during which the mixture obtained from the previous mixing step is heated at a temperature ranging from 120 to 220°C in inert atmosphere; and
- a cooling step, during which a polymer mass obtained from said polymerization step is cooled down; said method being characterized in that said natural origin reactants comprise:
   (i) a first compound with general formula I 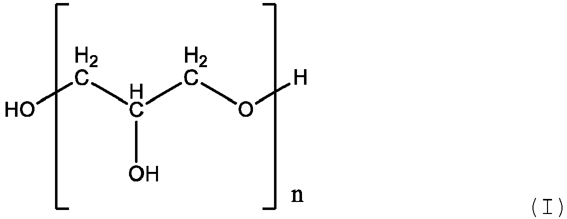 wherein n ranges from 1 to 20
   (ii) a second compound chosen among citric acid, malic acid and derivatives thereof with the carboxylic groups partially or completely in the form of ester or anhydride and with the hydroxyl groups partially or completely in the form of ester.

The (mean) molecular weight values indicated in the present description and in the claims were calculated with the standard international method ASTM D4001-13.

The polylactic acid-based polymers according to the present invention are produced starting from lactide and not from lactic acid, as they are structural polymers with high mechanical properties which must be processed by injection moulding. To reach the required molecular weight (Mn> 25,000 g/mol) it is necessary to start from lactide and not from lactic acid. In fact, it has been experimentally proven that the synthesis of polylactic acid-based polymers starting from lactic acid gives rise to polymers with low molecular weight, due to the impossibility of completely removing the water from the reaction medium, thus resulting in a composition having a balance that cannot be modified in the melt polymerization conditions. The maximum molecular weight that can be achieved with the use of lactic acid is Mn<1,500 g/mol and only with some synthesis techniques was it possible to achieve Mn<6,500 g/mol. Preferably, said first and said second compounds are present according to a molar ratio ranging from 0.05 to 2, more preferably ranging from 0.075 to 1, even more preferably ranging from 0.1 to 0.75.

Preferably, said first and said second compounds are present in a quantity ranging from 0.1% to 25% by weight, more preferably from 1% to 10% by weight, even more preferably from 1.5% to 5% by weight, relative to the weight of the lactide monomer.

Preferably, said polymerization catalyst is used in a quantity ranging from 0.0001% to 1% by weight, more preferably from 0.01% to 0.5% by weight, even more preferably from 0.015% to 0.25% by weight, relative to the weight of the lactide monomer. Preferably, the compound with general formula I has a n ranging from 1 to 15, even more preferably ranging from 1 to 10. Preferably, the second compound is chosen among citric acid, malic acid, trimethyl citrate, triethyl citrate, tripropyl citrate, triisopropyl citrate, tributyl citrate, triisobutyl citrate, tritertbutil citrate, trimethyl acetyl citrate, triethyl acetyl citrate, tripropyl acetyl citrate, triisopropyl acetyl citrate, tributyl acetyl citrate, triisobutyl acetyl citrate, tritertbutyl acetyl citrate, dimethyl malate, diethyl malate, dipropyl malate, diisopropyl malate, dibutyl malate, diisobutyl malate, ditertbutyl malate, dimethyl acetyl malate, diethyl acetyl malate, dipropyl acetyl malate, diisopropyl acetyl malate, dibutyl acetyl malate, diisobutyl acetyl malate, ditertbutyl acetyl malate.

Preferably, the method forming the subject matter of the present invention comprises a solid state polycondensation (SSP) step, during which the polymer mass obtained from the cooling step is heated at a temperature ranging from 100 to 160°C and at a pressure ranging from 10⁻³ to 1 torr.

Preferably, said solid state polycondensation step comprises a preliminary operation of granulation of the polymer, during which the polymer mass obtained from the cooling step is granulated.

### BEST MODE FOR CARRYING OUT THE INVENTION

Examples of embodiment of the present invention are provided hereunder purely by way of non-limiting illustration.

The unit Torr may be converted into the SI-unit Pa as follows: 1 Torr ≙ 133.322 Pa.

The examples set forth below provide for the synthesis of some polymers representative of the invention starting from LL-lactide, as main reactant monomer, by means of ring-opening polymerization.

In general, the use of reactants with free carboxylic acids requires the use of a larger amount of catalysts capable of promoting ring-opening polymerization and/or higher molten state reaction times to obtain a high conversion of the lactide monomer.

In general, the use of reactants with ester derivatives of carboxylic acids requires the use of catalysts capable of promoting transesterification reactions.

The polymers indicated in the examples were obtained by means of ring-opening polymerization in the presence of suitable catalysts, described in said examples.

As already indicated, the choice of the catalyst is not selective for the purposes of the final properties of the polymer.

The method used for the examples is as follows:
The lactide together with the other reactants, the catalysts and any process stabilisers, in the amounts indicated in the examples, are loaded into a 250 ml single-necked flask. The reaction flask is equipped with a three-necked joint; the central neck is equipped with an overhead stirrer, while the two lateral necks are equipped with two stopcocks for the inflow and outflow of inert gas to maintain the reaction atmosphere free of oxygen and to allow the removal of any volatile reaction products.

Before heating the reaction flask loaded with the reactants in the oven, the reaction atmosphere is purged to eliminate the oxygen present with suitable vacuum-inert gas (N₂) cycles to then keep the reaction environment under a continuous flow of inert gas at around 50 ml/min.

The reaction is conducted by means of heating to 190°C for the time indicated in the examples.

At the end of the reaction, the polymer is left to cool to room temperature, maintaining the nitrogen flow and is subsequently recovered as solid material at room temperature.

The polymers thus recovered are subjected to a further solid state polycondensation (SSP) step.

The solid state polycondensation step is conducted using the following methodology: the polymer is broken down into small granules (from 1 to 8 mm) and is placed in a 250 ml single-neck flask equipped with a single-neck cylindrical joint, in turn equipped with a stopcock to which a mechanical vacuum pump is connected.

The SSP is conducted at a temperature of 150°C in vacuum conditions of 10⁻¹ Torr for 15 hours.

During the SSP step most of the residual lactide not reacted during the ring-opening polymerization step and any volatile reaction products are also eliminated.

By convention in the examples below the polymers obtained will be called:
"TQ" the polymer obtained following the ring-opening polymerization.

"SSP" the polymer obtained following the further solid state polycondensation step.

In each of the examples below, the related polymer (TQ) obtained in the ring-opening polymerization step is partly analyzed as is and partly subjected to the SSP process to be analyzed subsequently.

The results of the analyses are set forth in Tables I and II below.

With the ring-opening polymerization methodology described above we obtain a polymer from the following formulations and utilizing the following reaction conditions:
Example 1:
   25 g of LL-lactide
   106.5 mg of glycerine
   625.2 mg of tributyl citrate
   7.7 mg of Sn octanoate (catalyst)
   The reaction is conducted for 3 hours at 190°C.
Example 2:
   25 g of LL-lactide
   106.5 mg of glycerine
   552.1 mg of triethyl-acetyl-citrate
   7.7 mg of Sn octanoate (catalyst)
   The reaction is conducted for 3 hours at 190°C.
Example 3:
   25 g of LL-lactide
   53.2 mg of glycerine
   232.6 mg of malic acid
   7.6 mg of Sn octanoate (catalyst)
   The reaction is conducted for 6 hours at 190°C.
Example 4:
   25 g of LL-lactide
   416.7 mg of polyglycerol-3,
   1.56 g of tributyl citrate
   8 mg of Sn octanoate (catalyst)
   The reaction is conducted for 4 hours at 180°C.
Example 5:
   25 g of LL-lactide
   416.7 mg of polyglycerol-3
   1.56 g of tributyl citrate
   8 mg of Sn octanoate (catalyst)
   8 mg of Mn acetate tetrahydrate (catalyst)
   8 mg of Co acetate tetrahydrate (catalyst)
   The reaction is conducted for 4 hours at 190°C.
Example 6:
   25 g of LL-lactide
   416.7 mg of polyglycerol-3
   581.5 mg of malic acid
   78 mg of Sn octanoate (catalyst)
   The reaction is conducted for 6 hours at 200°C.
Example 7:
   25 g of LL-lactide
   416.7 mg of polyglycerol-3
   833.1 mg of citric acid
   79 mg of Sn octanoate (catalyst)
   The reaction is conducted for 6 hours at 190°C.
Example 8:
   25 g of LL-lactide
   1.32 g of polyglycerol-10
   2.00 g of citric acid
   85 mg of Sn octanoate (catalyst)
   The reaction is conducted for 6 hours at 190°C.
Example 9:
   25 g of LL-lactide
   1.32 g of polyglycerol-10
   2.79 g of malic acid
   87 mg of Sn octanoate (catalyst)
   The reaction is conducted for 6 hours at 190°C.
Example 10:
   25 g of LL-lactide
   1.32 g of polyglycerol-10
   3.75 g of tributyl citrate
   9 mg of Sn octanoate (catalyst)
   The reaction is conducted for 3 hours at 190°C.
Comparative example:
   25 g of LL-lactide
   7.5 mg of Sn octanoate (catalyst)
   The reaction is conducted for 3 hours at 190°C.

The polymers obtained in the examples described were analyzed to assess their properties by means of:
- differential scanning calorimetry, DSC, analysis to assess thermal properties;
- thermogravimetric analysis, TGA, to assess thermal stability;
- rheological analysis by means of rotational rheometer to assess the melt viscosity at zero shear rate;
- size-exclusion chromatography, SEC, analysis to assess the mean molecular weights and their distribution.

The amount of residual monomer was also determined.

The analysis techniques used are described below.

### DSC analysis:

DSC analyses were conducted using 40 µl aluminium crucibles weighing around 5-10 mg of sample. The heat cycle used to conduct the analyses is the following:
- first heating from 25°C to 200°C at 10°C/min
- maintenance for 2 minutes at 200°C
- cooling from 200°C to 25°C at 10°C/min
- maintenance for 2 minutes at 25°C
- second heating from 25°C to 200°C at 10°C/min
The following were considered as thermal properties of the synthesized polymers:
- the cold crystallization temperature (Tcc) measured during the first heating step;
- the melt temperature (Tm) measured during the second heating step.

### TGA analysis:

TGA analyses were conducted using an alumina crucible weighing around 5-10 mg of sample. The heat cycle used to conduct the analyses is the following:
- heating from 30°C to 800°C at 20°C/min in nitrogen flow at 20 ml/min.

The temperatures at which the loss of 5% by weight (T_{5%}), of 10% by weight (T_{10%}) and of 50% by weight (T_{50%}) occurred were considered as properties of the synthesized polymers.

### Rheological analysis:

Rheological analyses were conducted, after accurate drying of the samples analyzed, by means of a rotational rheometer equipped with a 25mm parallel plate measuring instrument at 190°C in *"frequency sweep"* with variation of the oscillation frequency from 100 Hz to 0.1 Hz and with constant oscillation amplitude at 5%.

The zero shear rate complex viscosity ([η₀]) extrapolated from the rheological curves obtained was considered as property of the synthesized polymers.

### SEC analysis:

SEC analyses were conducted using the following chromatographic system:
- Eluent/solvent: methylene chloride
- Flow: 1 ml/min
- Columns: 4 columns in series with stationary phase in polystyrene gel and pore size respectively of 10³Å, 10⁴Å, 10⁵Å and 10²Å
- Detector: UV with wavelength at 230 nm

Calibration of the SEC system was carried out with polystyrene standards in the molecular mass range from 106 to 2,000,000 Dalton.

The number mean molecular weight (Mn) in terms of polystyrene equivalent (system calibration) and distribution of the molecular masses (D) equivalent to the ratio between the weighted mean molecular weight (Mw) and the number mean molecular weight (Mn) both in terms of polystyrene equivalent were considered as properties of the synthesized polymers.

Two tables summarizing the properties measured for the synthesized polymers are set forth below. Where not indicated the properties were not measured.

**Table I**

| Example | Tc (°C) | Tm (°C) | Tg (°C) | T_{5%} (°C) | T_{50%} (°C) |
|---|---|---|---|---|---|
| 1 TQ | 106.0 | 158.5 | 45.9 | 254 | 308 |
| 1 SSP | 106.3 | 158.8 | 52.7 | 256 | 305 |
| 2 TQ | 115.7 | 161.2 | 42.0 | 250 | 310 |
| 2 SSP | 115.0 | 160.6 | 52.3 | 249 | 310 |
| 3 TQ | 108.0 | 159.0 | 43.1 | 245 | 306 |
| 3 SSP | 108.9 | 160.4 | 55.2 | 251 | 309 |
| 4 TQ | 109.1 | 159.2 | 54.7 | 258 | 315 |
| 4 SSP | 109.8 | 159.4 | 54.6 | 260 | 315 |
| 5 TQ | // | // | 33.4 | 230 | 280 |
| 5 SSP | // | // | 33.9 | 242 | 305 |
| 6 TQ | 108.2 | 157.0 | 53.5 | 249 | 307 |
| 6 SSP | 108.4 | 159.6 | 53.5 | 252 | 309 |
| 7 TQ | 120.0 | 149.0 | 43.1 | 247 | 306 |
| 7 SSP | 121.4 | 149.2 | 43.4 | 251 | 310 |
| 8 TQ | // | // | 35.7 | 235 | 302 |
| 8 SSP | // | // | 35.8 | 235 | 304 |
| 9 TQ | // | // | 36.3 | 230 | 300 |
| 9 SSP | // | // | 36.3 | 231 | 300 |
| 10 TQ | // | // | 32.4 | 229 | 301 |
| 10 SSP | // | // | 32.7 | 235 | 302 |
| Comp. TQ | 108.1 | 167.8 | 57.8 | 252 | 320 |
| Comp. SSP | 110.0 | 175.4 | 59.5 | 262 | 325 |

**Table II**

| Example | [η₀] Pa*s | Mn (kDalton) | D | %w/w residual lactide |
|---|---|---|---|---|
| 1 TQ | 1100 | 134 | 2.3 | 5.9 |
| 1 SSP | 1500 | 150 | 2.2 | 0.2 |
| 2 TQ | 1000 | 110 | 2.3 | 6.0 |
| 2 SSP | 1300 | 118 | 2.2 | 0.3 |
| 3 TQ | 1300 | 185 | 2.1 | 3.7 |
| 3 SSP | 1800 | 200 | 2.0 | 0.1 |
| 4 TQ | 1300 | 170 | 2.3 | 9 |
| 4 SSP | 1500 | 180 | 2.0 | 0.5 |
| 5 TQ | 100 | 60 | 2.5 | 15.1 |
| 5 SSP | 600 | 70 | 2.2 | 2.3 |
| 6 TQ | 800 | 95 | 2.1 | 9.5 |
| 6 SSP | 1300 | 110 | 2.0 | 0.9 |
| 7 TQ | 1000 | 100 | 2.1 | 3.8 |
| 7 SSP | 1200 | 110 | 2.0 | 0.4 |
| 8 TQ | 600 | 90 | 2.7 | 4.5 |
| 8 SSP | 900 | 90 | 2.5 | 0.5 |
| 9 TQ | 400 | 80 | 2.6 | 5.0 |
| 9 SSP | 600 | 80 | 2.4 | 0.4 |
| 10 TQ | 300 | 70 | 2.4 | 4.8 |
| 10 SSP | 500 | 75 | 2.3 | 0.9 |
| Comp. TQ | 1900 | 240 | 1.8 | 2.5 |
| Comp. SSP | 2300 | 250 | 1.7 | 0. 1 |

The polymers of examples 1 to 10 all have lower melt viscosity relative to the comparison polymers. The semi-crystalline polymers (i.e., those with a Tcc and Tm value in Table I), due to the low viscosity relative to the comparison polymers, can be more easily injection moulded. The wide distribution of molecular weights (D in Table II) although in the presence of a lower Mn relative to the comparison polymers, implies that, among polymer chains, there are species with high molecular weight essential to ensure adequate mechanical properties of the polymer. Therefore, the combination of these two factors (low viscosity and wide distribution of the molecular weights) allows to obtain polymers that are easily injection moulded (i.e., possibility of filling the moulds more quickly or of filling more complex moulds with thin parts) with adequate mechanical properties.

Amorphous polymers (those without Tm and Tcc in Table I), due to the low viscosity and to their amorphous nature, can be used as plasticizers to facilitate processing during injection moulding of PLA.

## Claims

1. A method to prepare a polylactic acid-based polymer and having a molecular weight (Mn) greater than 25,000 g/mol as determined by ASTM D4001-13; said method comprising
- a mixing step, during which lactide monomers, at least one polymerization catalyst and natural origin reactants are mixed together;
- a polymerization step, during which the mixture obtained from the previous mixing step is heated at a temperature ranging from 120 to 220°C in inert atmosphere; and
- a cooling step, during which a polymer mass obtained from said polymerization step is cooled down; said method being **characterized in that** said natural origin reactants comprise:
(i) a first compound with general formula I 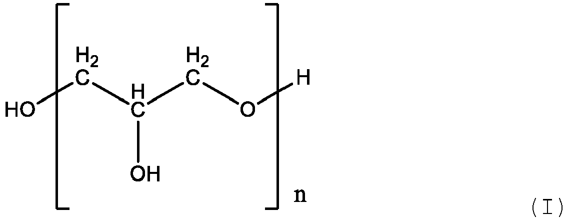 wherein n ranges from 1 to 20.
(ii) a second compound chosen among citric acid, malic acid and derivatives thereof with the carboxylic groups partially or completely in the form of ester or anhydride and with the hydroxyl groups partially or completely in the form of ester.

2. A method according to claim 1, **characterized in that** said first and said second compounds are present according to a molar ratio ranging from 0.05 to 2.

3. A method according to claim 1, **characterized in that** said first and said second compounds are present according to a molar ratio ranging from 0.075 to 1.

4. A method according to one of the preceding claims, **characterized in that** said first and said second compounds are present in a quantity ranging from 0.1% to 25% by weight relative to the weight of the lactide monomer.

5. A method according to one of the preceding claims, **characterized in that** said first and said second compounds are present in a quantity ranging from 1% to 10% by weight relative to the weight of the lactide monomer.

6. A method according to one of the preceding claims, **characterized in that** said first and said second compounds are present in a quantity ranging from 1.5% to 5% by weight relative to the weight of the lactide monomer.

7. A method according to one of the preceding claims, **characterized in that** said polymerization catalyst is used in a quantity ranging from 0.0001% to 1% by weight relative to the weight of the lactide monomer.

8. A method according to one of the preceding claims, **characterized in that** in the compound with general formula (I) n ranges from 1 to 10.

9. A method according to one of the preceding claims, **characterized in that** said second compound is chosen among citric acid, malic acid, trimethyl citrate, triethyl citrate, tripropyl citrate, triisopropyl citrate, tributyl citrate, triisobutyl citrate, tritertbutil citrate, trimethyl acetyl citrate, triethyl acetyl citrate, tripropyl acetyl citrate, triisopropyl acetyl citrate, tributyl acetyl citrate, triisobutyl acetyl citrate, tritertbutyl acetyl citrate, dimethyl malate, diethyl malate, dipropyl malate, diisopropyl malate, dibutyl malate, diisobutyl malate, ditertbutyl malate, dimethyl acetyl malate, diethyl acetyl malate, dipropyl acetyl malate, diisopropyl acetyl malate, dibutyl acetyl malate, diisobutyl acetyl malate, ditertbutyl acetyl malate.

10. A method according to one of the preceding claims, **characterized in that** it comprises a solid state polycondensation (SSP) step, during which the polymer mass obtained from the cooling step is heated at a temperature ranging from 100 to 160°C and at a pressure ranging from 10⁻³ to 1 torr.

## Patentansprüche

1. Verfahren zur Herstellung eines Polymers auf Polymilchsäurebasis mit einem Molekulargewicht (Mn) von größer als 25.000 g/mol, bestimmt durch ASTM D4001-13; wobei das Verfahren folgendes umfasst:
- einen Mischungsschritt, während dem Lactidmonomere, mindestens ein Polymerisationskatalysator und Reaktanten natürlichen Ursprungs miteinander gemischt werden;
- einen Polymerisationsschritt, während dem die aus dem vorherigen Mischungsschritt erhaltene Mischung bei einer Temperatur im Bereich von 120 bis 220 °C in einer inerten Atmosphäre erwärmt wird; und
- einen Kühlungsschritt, während dem eine aus dem Polymerisationsschritt erhaltene Polymermasse heruntergekühlt wird; wobei das Verfahren **dadurch gekennzeichnet ist, dass** die Reaktanten natürlichen Ursprungs folgendes umfassen:
(i) eine erste Verbindung mit der allgemeinen Formel I 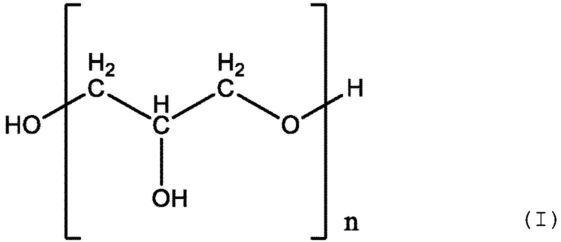 worin n im Bereich von 1 bis 20 liegt,
(ii) eine zweite Verbindung, ausgewählt aus Zitronensäure, Äpfelsäure und Derivaten davon, in denen die Carboxylsäuregruppen teilweise oder vollständig in der Form eines Esters oder Anhydrids vorliegen und die Hydroxylgruppen teilweise oder vollständig in der Form eines Esters vorliegen.

2. Verfahren gemäß Anspruch 1, **dadurch gekennzeichnet, dass** die erste und zweite Verbindung in einem molaren Verhältnis im Bereich von 0,05 bis 2 vorhanden sind.

3. Verfahren gemäß Anspruch 1, **dadurch gekennzeichnet, dass** die erste und zweite Verbindung in einem molaren Verhältnis im Bereich von 0,075 bis 1 vorhanden sind.

4. Verfahren gemäß mindestens einem der vorhergehenden Ansprüche, **dadurch gekennzeichnet, dass** die erste und zweite Verbindung in einer Menge im Bereich von 0,1 Gew.-% bis 25 Gew.-% vorhanden sind, bezogen auf das Gewicht des Lactidmonomers.

5. Verfahren gemäß mindestens einem der vorhergehenden Ansprüche, **dadurch gekennzeichnet, dass** die erste und zweite Verbindung in einer Menge im Bereich von 1 Gew.-% bis 10 Gew.-% vorhanden sind, bezogen auf das Gewicht des Lactidmonomers.

6. Verfahren gemäß mindestens einem der vorhergehenden Ansprüche, **dadurch gekennzeichnet, dass** die erste und zweite Verbindung in einer Menge im Bereich von 1,5 Gew.-% bis 5 Gew.-% vorhanden sind, bezogen auf das Gewicht des Lactidmonomers.

7. Verfahren gemäß mindestens einem der vorhergehenden Ansprüche, **dadurch gekennzeichnet, dass** der Polymerisationskatalysator in einer Menge im Bereich von 0,0001 Gew.-% bis 1 Gew.-% verwendet wird, bezogen auf das Gewicht des Lactidmonomers.

8. Verfahren gemäß mindestens einem der vorhergehenden Ansprüche, **dadurch gekennzeichnet, dass** in der Verbindung mit der allgemeinen Formel (I) n im Bereich von 1 bis 10 liegt.

9. Verfahren gemäß mindestens einem der vorhergehenden Ansprüche, **dadurch gekennzeichnet, dass** die zweite Verbindung ausgewählt ist aus Zitronensäure, Äpfelsäure, Trimethylcitrat, Triethylcitrat, Tripropylcitrat, Triisopropylcitrat, Tributylcitrat, Triisobutylcitrat, Tritertbutylcitrat, Trimethylacetylcitrat, Triethylacetylcitrat, Tripropylacetylcitrat, Triisopropylacetylcitrat, Tributylacetylcitrat, Triisobutylacetylcitrat, Tritertbutylacetylcitrat, Dimethylmalat, Diethylmalat, Dipropylmalat, Diisopropylmalat, Dibutylmalat, Diisobutylmalat, Ditertbutylmalat, Dimethylacetylmalat, Diethylacetylmalat, Dipropylacetylmalat, Diisopropylacetylmalat, Dibutylacetylmalat, Diisobutylacetylmalat, Ditertbutylacetylmalat.

10. Verfahren gemäß mindestens einem der vorhergehenden Ansprüche, **dadurch gekennzeichnet, dass** es einen Festphasenpolykondensationsschritt (SSP) umfasst, während dem die aus dem Kühlungsschritt erhaltene Polymermasse bei einer Temperatur im Bereich von 100 bis 160 °C und einem Druck im Bereich von 10⁻³ bis 1 torr erwärmt wird.

## Revendications

1. Procédé pour préparer un polymère à base d'acide polylactique et ayant une masse moléculaire (Mn) supérieure à 25 000 g/mol comme déterminée par ASTM D4001-13 ; ledit procédé comprenant
- une étape de mélange, pendant laquelle des monomères de lactide, au moins un catalyseur de polymérisation et des réactifs d'origine naturelle sont mélangés ensemble ;
- une étape de polymérisation, pendant laquelle le mélange obtenu à partir de l'étape de mélange précédente est chauffé à une température de 120 à 220°C dans une atmosphère inerte ; et
- une étape de refroidissement, pendant laquelle une masse de polymère obtenue à partir de ladite étape de polymérisation est refroidie ; ledit procédé étant **caractérisé en ce que** lesdits réactifs d'origine naturelle comprennent :
(i) un premier composé avec la formule générale I 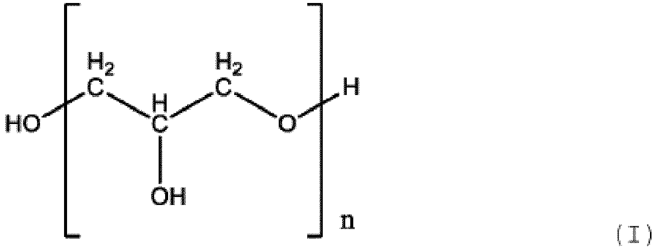 où n est de 1 à 20.
(ii) un second composé choisi parmi l'acide citrique, acide malique et dérivés de ceux-ci avec les groupes carboxyliques partiellement ou complètement dans la forme d'ester ou anhydride et avec les groupes hydroxyle partiellement ou complètement dans la forme d'ester.

2. Procédé selon la revendication 1, **caractérisé en ce que** ledit premier et ledit second composés sont présents selon un rapport molaire de 0,05 à 2.

3. Procédé selon la revendication 1, **caractérisé en ce que** ledit premier et ledit second composés sont présents selon un rapport molaire de 0,075 à 1.

4. Procédé selon l'une quelconque des revendications précédentes, **caractérisé en ce que** ledit premier et ledit second composés sont présents dans une quantité de 0,1 % à 25 % en masse par rapport à la masse du monomère de lactide.

5. Procédé selon l'une quelconque des revendications précédentes, **caractérisé en ce que** ledit premier et ledit second composés sont présents dans une quantité de 1 % à 10 % en masse par rapport à la masse du monomère de lactide.

6. Procédé selon l'une quelconque des revendications précédentes, **caractérisé en ce que** ledit premier et ledit second composés sont présents dans une quantité de 1,5 % à 5 % en masse par rapport à la masse du monomère de lactide.

7. Procédé selon l'une quelconque des revendications précédentes, **caractérisé en ce que** ledit catalyseur de polymérisation est utilisé dans une quantité de 0,0001 % à 1 % en masse par rapport à la masse du monomère de lactide.

8. Procédé selon l'une quelconque des revendications précédentes, **caractérisé en ce que** dans le composé avec la formule générale (I) n est de 1 à 10.

9. Procédé selon l'une quelconque des revendications précédentes, **caractérisé en ce que** ledit second composé est choisi parmi l'acide citrique, acide malique, citrate de triméthyle, citrate de triéthyle, citrate de tripropyle, citrate de triisopropyle, citrate de tributyle, citrate de triisobutyle, citrate de tritertbutyle, citrate de triméthylacétyle, citrate de triéthylacétyle, citrate de tripropylacétyle, citrate de triisopropylacétyle, citrate de tributylacétyle, citrate de triisobutylacétyle, citrate de tritertbutylacétyle, malate de diméthyle, malate de diéthyle, malate de dipropyle, malate de diisopropyle, malate de dibutyle, malate de diisobutyle, malate de ditertbutyle, malate de diméthylacétyle, malate de diéthylacétyle, malate de diproprylacétyle, malate de diisopropylacétyle, malate de dibutylacétyle, malate de diisobutylacétyle, malate de ditertbutylacétyle.

10. Procédé selon l'une quelconque des revendications précédentes, **caractérisé en ce qu'**il comprend une étape de polycondensation à l'état solide (SSP), pendant laquelle la masse de polymère obtenue à partir de l'étape de refroidissement est chauffée à une température de 100 à 160°C et à une pression de 10⁻³ à 1 torr.
